# EUROPÄISCHE PATENTANMELDUNG

(11) **EP 0 893 129 A2**
(43) Veröffentlichungstag der Anmeldung: **27.01.1999**
(21) Anmeldenummer: 98111152.9
(22) Anmeldetag: 17.06.1998
(51) Int. Cl.: A61L 29/00

(54) **Polymermaterial zur Herstellung medizinischer Arbeitsmittel**

(30) Priorität: 27.06.1997 DE 19727446
(71) Anmelder: Fresenius Medical Care Deutschland GmbH, 61350 Bad Homburg v.d.H. (DE)
(72) Erfinder: Nederlof, Bernd, 66606 St. Wendel (DE); Nicola, Thomas, 57350 Spicheren (FR)
(74) Vertreter: Laufhütte, Dieter, Dr.-Ing.

(57) **Zusammenfassung**

Die Erfindung betrifft ein Polymermaterial zur Herstellung von medizinischen Arbeitsmitteln, das unpolar und hydrophob ist, ein Molekulargewicht von < 50 000 g/mol, eine Schmelzviskosität von < 1000 Poise sowie einen Kristallisationsgrad von < 19 % aufweist. Weiterhin liegt in dem erfindungsgemäßen Polymermaterial der Gehalt an Additiven < 5.000 ppm und der Gehalt an Verunreinigungen < 1.000 ppm. Die Erfindung betrifft ferner ein derartiges Polymermaterial enthaltende Mono- und Mehrschichtschläuche sowie Verfahren zu deren Herstellung.

## Beschreibung

Die Erfindung betrifft ein Polymermaterial zur Herstellung von medizinischen Arbeitsmitteln, das sich durch gute Hämokompatibilität und günstige mechanische sowie physikalisch-chemische Eigenschaften auszeichnet. Die Erfindung betrifft ferner ein derartiges Polymermaterial enthaltende Mono- und Mehrschichtschläuche sowie Verfahren zu deren Herstellung.

Polymermaterialien, die zur Herstellung von medizinischen Arbeitsmitteln, wie z.B. Schläuchen, Kathetern und Formteilen, dienen, müssen verschiedensten Anforderungen genügen, die sich zum einen auf die Kompatibilität mit den in Berührung kommenden Flüssigkeiten und zum anderen auf mechanische und physikalischchemische Eigenschaften erstrecken. So ist eine wichtige Voraussetzung für den Einsatz derartiger Polymermaterialien die Hämokompatibilität. Es ist bekannt, daß eine Vielzahl von bei extrakorporalen Kreisläufen verwendeten Materialien sowie darin enthaltene Verunreinigungen zu einer verstärkten Trombogenese, einer Aktivierung des Komplement- und Immunsystems und einer Schädigung, Depletion oder Zerstörung von Zellen führen und somit nicht hämokompatibel sind. Darüber hinaus kann es zu unerwünschten Absorptions- und Adhäsionserscheinungen sowie zur Abgabe (Migration) von Materialadditiven und Verunreinigungen kommen, die die Zusammensetzung des aufgenommenen oder transportierten Blutes oder einer anderen Flüssigkeit verändern. Die Hämokompatibilität ist für alle medizinischen Arbeitsmittel, die mit Blut oder blutähnlichen Flüssigkeiten in Kontakt kommen von Bedeutung. Es sind dies neben Schläuchen und Schlauchsystemen auch Membranen für Dialysatoren, Hämokonzentratoren und Oxygenatoren. Obwohl die verwendeten Schläuche im allgemeinen eine verhältnismäßig geringe Oberfläche aufweisen, ist die Hämokompatibilität von Schläuchen und insbesondere von Schlauchsystemen eine wichtige Kenngröße.

Weitere wichtige Anforderungen sind mechanische und physikalisch-chemische Eigenschaften, wie eine hohe Elastizität, eine geringe Härte, eine hohe Knickresistenz, eine gute Hitzesterilisierbarkeit sowie eine gute Transparenz. Unter einen guten Hitzesterilisierbarkeit wird hierbei verstanden, daß das erfindungsgemäße Polymermaterial bei einer Hitzesterilisation keine nachteiligen Veränderungen der mechanischen und physikalisch-chemischen Eigenschaften erfährt.

Die Verwendung handelsüblicher Polymere, wie z.B. Weich-PVC, für Blutschläuche ist bekannt. Derartige Materialien weisen den Nachteil auf, daß sie Weichmacher besitzen, die bei Kontakt mit Blut oder einer mechanischen oder physikalischchemischen Beanspruchung herausmigrieren können. Ein Beispiel ist die Migration von den als Weichmacher eingesetzten Trimellithsäureresten aus PVC-Schläuchen. Weitere Nachteile ergeben sich aus Mikrorauhigkeiten sowie der Polarisation der verwendeten Materialien, die zu einer erhöhten Trombogenese führen können.

Um günstige Eigenschaften verschiedener Polymermaterialien zu kombinieren, werden vielfach Mehrschichtschläuche eingesetzt. Dabei handelt es sich üblicherweise um dreischichtige Schläuche, deren Innenschichtmaterial nach den Kriterien einer guten Hitzesterilisierbarkeit und Hämokompatibilität ausgewählt wird. Die Auswahl des Mittelschichtmaterials orientiert sich an den Kriterien der Flexibilität und Knickbeständigkeit sowie der guten Haftvermittlung mit den angrenzenden Schichten. In der WO 93/23 093 ist ein PVC-freier Mehrschichtschlauch für medizinische Zwecke offenbart, bei dem eine äußere Schicht aus einer Mischung aus Polypropylen Copolymer und Styrol-Ethylen-Butylen-Copolymer über eine Verbindungsschicht mit einer inneren Schicht aus Polyamid und Ethylen-Vinylacetat verbunden ist. Die DE 195 34 455 beschreibt einen Mehrschichtschlauch, bei dem ein bei Temperaturen ≥ 121°C verformbares Polymermaterial eine erste Schicht bildet, während eine zweite Schicht ein bei Temperaturen ≥ 121°C formbeständiges Polymer darstellt. Dadurch wird zum einen eine gute Haftung der Schichten untereinander als auch eine flexible Anpassung des Schlauchs an eine Vielzahl verschiedener Konnektor- und Beutelmaterialien erreicht, ohne daß dazu eine Zwischenschicht vorgesehen werden muß.

Für die Verwendung in einschichtigen Schläuchen konnte sich bis heute im wesentlichen nur Weich-PVC durchsetzen, da andere in Frage kommende Werkstoffe entweder unzureichende mechanische oder physikalisch-chemische Eigenschaften oder eine geringe Hämokompatibilität aufweisen.

Aufgabe der vorliegenden Erfindung ist es, ein Polymermaterial derart weiterzubilden, daß sowohl eine gute Hämokompatibilität als auch günstige mechanische und physikalisch-chemische Eigenschaften erzielt werden, wodurch das Material allein oder auch in Kombination mit anderen Polymeren für die Herstellung medizinischer Arbeitsmittel geeignet ist. Aufgabe ist es ferner, Verfahren zur Herstellung von derartige Polymermaterialen enthaltenden Schläuchen zu schaffen.

Erfindungsgemäß wird diese Aufgabe durch die Merkmalskombination des Polymermaterials nach Anspruch 1 gelöst. Das Polymermaterial ist unpolar und hydrophob, wodurch es eine geringe Neigung zur Absorption von Blutbestandteilen (z.B. Proteinen) und Medikamenten aufweist. Der die Hydrophobie kennzeichnende Kontaktwinkel liegt in einem Bereich von 100 - 140 °. Das erfindungsgemäße Polymermaterial hat ein Molekulargewicht von < 50 000 g/mol, eine Schmelzviskosität bei einer Scherrate von 10 000 1/s von < 1 000 Poise und einen Kristallisationsgrad von weniger als 19 %. Die geringe Schmelzviskosität sowie der geringe Kristallisationsgrad des erfindungsgemäßen Polymermaterials bewirken, daß die entsprechend geringe Neigung zum Schmelzbruch und zur Kristallisation die Herstellung einer weitgehend glatten und auch nach der Sterilisation noch möglichst kristallisationsfreien Oberfläche ermöglicht. Das erfindungsgemäße Polymermaterial weist ferner einen Gehalt an Additiven, insbesondere Weichmachern, auf, der unter 5.000 ppm liegt. Aufgrund der günstigen Eigenschaften des Polymermaterials werden die mechanischen und physikalischen Eigenschaften bei diesem Additivgehalt nicht nachhaltig beeinträchtigt. Ferner wird die Migration derartiger Substanzen aus blutberührten Oberflächen des Polymermaterials weitgehend unterbunden. Erfindungsgemäß liegt der Gehalt an Verunreinigungen, wie Monomeren, Oliomeren und Katalysatorresten, bei unter 1.000 ppm. Da Blut sowohl hydrophile als auch liprophile Substanzen aufnehmen kann, läßt sich eine Auswaschung derartiger Verunreinigungen entsprechend dadurch weitgehend zurückdrängen, daß deren Anteil im Polymergerüst gering gehalten wird.

Gemäß einer bevorzugten Ausgestaltung der vorliegenden Erfindung ist vorgesehen, daß das Polymermaterial Polyethylen-Plastomere und/oder hydrierte Styrolisopren-Copolymere und/oder Styrol-Ethylen-Butylen-Block-Copolymere und/oder und Styrol-Ethylen-Propylen-Block-Copolymere und somit Polymere mit hohem Kohlenwasserstoffanteil enthält. Durch den geringen Anteil an Hydroxyl-, Carbonyl- und Carboxylgruppen wird eine gute Hydrophobie und damit eine geringe Proteinadsorption an den Polymermaterialien erreicht. Durch den niedrigen Kristallisationsgrad und den vorgegebenen Viskositätsbereich erreicht man eine glatte Oberfläche und damit keine Zelladhäsion und keine Turbulenzen. Durch den geringen Gehalt an Verunreinigungen und Additiven wird eine hohe Hämokompatilität erreicht.

Die Styrol-Ethylen-Butylen-Block-Copolymere und/oder die Styrol-Ethylen-Propylen-Block-Copolymere können einen Di-Block-Anteil aufweisen.

In weiterer Ausgestaltung der vorliegenden Erfindung ist es vorgesehen, daß die Polymermaterialien aus ökologischen Gründen keine Halogene enthalten.

Die Erfindung betrifft ferner einen Schlauch zur Aufnahme oder Transport von Blut, Blutbestandteilen oder medizinischen Lösungen, der ein erfindungsgemäßes Polymermaterial enthält und somit sowohl eine gute Hämokompatibilität und auch gute mechanische und physikalisch-chemische Eigenschaften aufweist. Aufgrund der günstigen Eigenschaften des Polymermaterials weist der Schlauch eine hohe Elastizität, eine geringe Härte (Shore A 65-90), eine gute Knickresistenz sowie Transparenz und eine hohe Hitzesterilisierbarkeit auf.

Eine andere Ausgestaltung des Schlauches besteht darin, daß das Polymermaterial Polyethylen-Plastomere (PEP) umfaßt und vernetzt ist, wodurch sich die mechanischen und physikalischen Eigenschaften des Schlauches derart verbessern, daß er als Monoschlauch ohne Zuhilfenahme weiterer Materialien verwendet werden kann.

Die Erfindung betrifft ferner einen Mehrschichtschlauch aus zwei oder mehr Schichten, wobei mindestens eine Schlauchschicht des Mehrschichtschlauches gemäß Anspruch 5 oder 6 gebildet ist. Durch die Kombination eines aus dem erfindungsgemäßen Polymermaterial bestehenden Schlauches mit einer oder mehreren anderen Schlauchschichten können insbesondere die mechanischen und Konnektionseigenschaften des Mehrschichtschlauches über einen weiten Bereich variiert werden, wodurch die Anpassung an vielfältige Anforderungen möglich ist.

Das erfindungsgemäße Verfahren zur Herstellung eines Schlauches gemäß Anspruch 5 oder 6 zeichnet sich dadurch aus, daß die Formgebung, z.B. durch Extrusion, Spritzgießen oder Blasformen, derart ausgeführt wird, daß verarbeitungsbedingte Oberflächenfehler und eine Kristallisation des Polymermaterials an der Oberfläche weitgehend verhindert werden. Auf diese Weise entsteht eine glatte und weitgehend kristallisationsfreie Oberfläche, die auch während nachfolgender Verarbeitungsschritte und der Lagerung erhalten bleibt. Ein Vorteil dieses Verfahrens ist es, daß die glatte Oberfläche die Kontaktfläche, Strömungsturbulenzen, Totzonen sowie die Adhäsion und Aktivierung von Zellen verringert. Die weitgehende Vermeidung der Kristallisation führt ferner zu einer gleichmäßigen Potentialverteilung sowie einer geringen Mikrorauhigkeit der blutberührenden Oberfläche. Die weitgehende Vermeidung der Kristallisation bzw. die Erzeugung einer Teilkristallinität erfolgt durch die Schaffung möglichst vieler Verzweigungen bei nicht rein amorphen Polymeren.

Die Erfindung betrifft weiterhin ein Verfahren zur Herstellung eines Mehrschichtschlauches durch Coextrusion, wobei mindestens eine Schlauchschicht des Mehrschichtschlauches nach Anspruch 5 oder 6 gebildet wird und wobei das Verfahren derart ausgeführt wird, daß diese Schicht eine glatte und weitgehend kristallisationsfreie Oberfläche aufweist.

Weitere Einzelheiten und Vorteile der Erfindung werden anhand der im nachfolgenden Beispiele näher erläutert.

Dabei zeigen die Beispiele 2 bis 4 die Hämokompatibilität des erfindungsgemäßen Polymermaterials im Vergleich mit dem Stand der Technik. Dem Vergleich liegt ein Beurteilungsmodell der Universitätsklinik Homburg zugrunde. Die Einzelwerte werden dimensionsfrei in einem Score-System von 0 - 65 dargestellt. Herkömmliche Polyethylenschläuche erreichen eine Score-Punktzahl von 25 - 40, handelsübliche PVC-Schläuche weisen eine Score-Punktzahl von 12 - 20 auf. Die Beurteilung der dargestellten Hämokompatibilität beruht auf Meßergebnissen über die Kontaktaktivierung, die Thrombingeneration, die Fibrinogen-Fibrinkonversion, die Fibrinolyse, die Plättchenaktivierung, die Proteolyse sowie über die Hämolyse. Die Varianten A und B in Beispiel 2 stellen einen erfindungsgemäßen Mehrschichtschlauch dar, dessen Blutkontaktschicht das erfindungsgemäße Polymermaterial enthält, während die Beispiele 3 und 4 aus herkömmlichen Materialien hergestellte Schläuche zeigen.

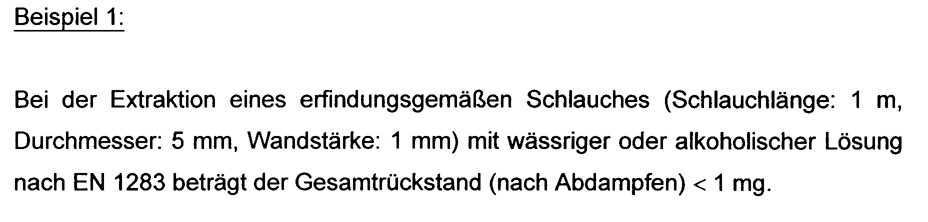

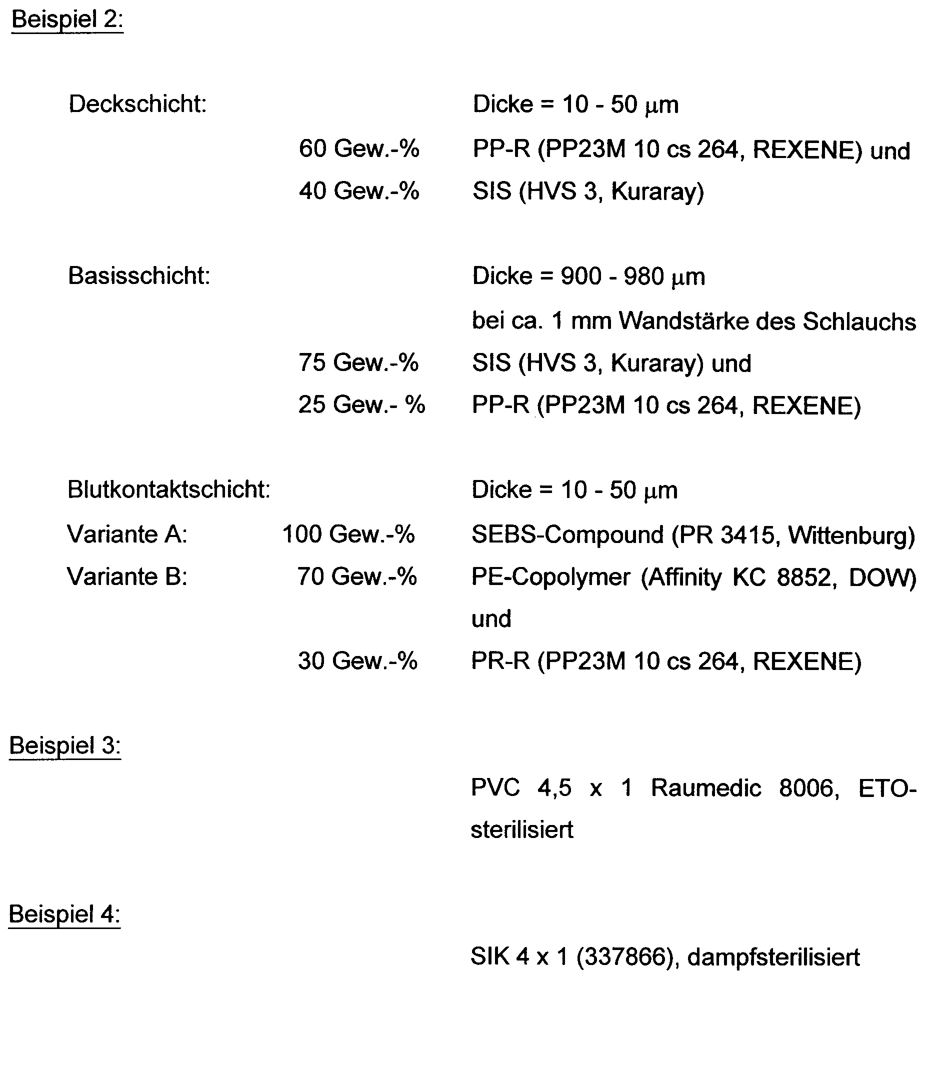

### Testergebnisse

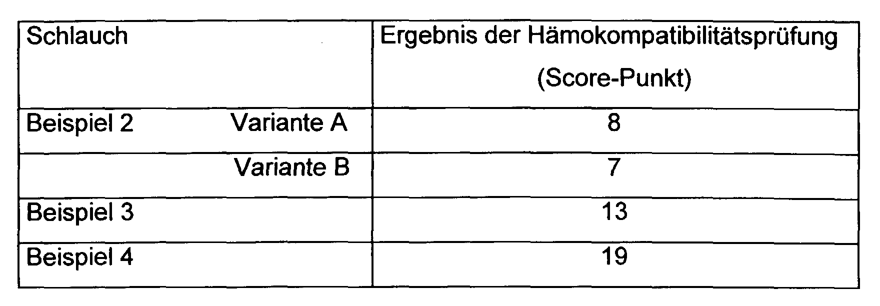

Die Abkürzungen bedeuten im einzelnen:
- PP-R:: Polypropylen-Random Copolymer
- SIS:: Styrol-Isopren-Styrol
- SEBS:: Styrol-Ethylen-Burylen-Styrol-Kautschuk
- PE-Co:: Polyethylen-Copolymer
- PEP:: Polyethylen-Plastomer (≙ PE-Co mit □ ≾ 0,9 g/cm³)
- PVC:: Polyvinylchlorid
- SIK:: Styrol-Isopren-Kautschuk

Die Varianten A und B in Beispiel 2, deren Blutkontaktschicht jeweils das erfindungsgemäße Polymermaterial enthält, zeigen gegenüber dem Stand der Technik nach Beispiel 3 und 4 eine deutlich geringere Score-Punktzahl und somit eine wesentlich verbesserte Hämokompatibilität.

## Patentansprüche

1. Polymermaterial zur Herstellung von medizinischen Arbeitsmitteln,
**dadurch gekennzeichnet**,
daß das Polymermaterial unpolar und hydrophob ist und die folgenden Eigenschaften aufweist:
Molekulargewicht < 50 000 g/mol
Schmelzviskosität bei Scherrate von 10 000 1/s < 1 000 Poise
Kristallisationsgrad < 19 %
Gehalt an Additiven < 5.000 ppm
Gehalt an Verunreinigungen < 1.000 ppm

2. Polymermaterial nach Anspruch 1, dadurch gekennzeichnet, daß es Polyethylen-Plastomere und/oder hydrierte Styrolisopren-Copolymere und/oder Styrol-Ethylen-Butylen-Block-Copolymere und/oder Styrol-Ethylen-Propylen-Block-Copolymere enthält.

3. Polymermaterial nach Anspruch 2, dadurch gekennzeichnet, daß die StyrolEthylen-Butylen-Block-Copolymere und/oder Styrol-Ethylen-Propylen-Block-Copolymere einen Di-Block-Anteil aufweisen.

4. Polymermaterial nach einem oder mehreren der Ansprüche 1 bis 3, dadurch gekennzeichnet, daß keine Halogene enthalten sind.

5. Schlauch zur Aufnahme oder Transport von Blut, Blutbestandteilen oder medizinischen Lösungen, dadurch gekennzeichnet, daß der Schlauch aus einem Polymermaterial nach einem oder mehreren der Ansprüche 1 bis 4 besteht.

6. Schlauch nach Anspruch 5, dadurch gekennzeichnet, daß das Polymermaterial, Polyethylen-Plastomere umfaßt und zur Verbesserung der mechanischen und/oder physikalischen Eigenschaften vernetzt ist.

7. Mehrschichtschlauch aus mindestens zwei oder mehr Schichten, dadurch gekennzeichnet, daß mindestens eine Schlauchschicht nach Anspruch 5 oder 6 gebildet ist.

8. Verfahren zur Herstellung eines Schlauchs nach Anspruch 5 oder 6, dadurch gekennzeichnet, daß das Polymermaterial nach der Formgebung eine glatte und weitgehend kristallisationsfreie Oberfläche aufweist.

9. Verfahren zur Herstellung eines Mehrschichtschlauches nach Anspruch 7, dadurch gekennzeichnet, daß der Mehrschichtschlauch durch Coextrusion hergestellt wird und mindestens eine Schlauchschicht nach Anspruch 5 oder 6 gebildet wird und eine glatte und weitgehend kristallisationsfreie Oberfläche aufweist.
